# EUROPÄISCHE PATENTSCHRIFT

(11) **EP 3 312 859 B1**
(45) Veröffentlichungstag und Bekanntmachung des Hinweises auf die Patenterteilung: **05.05.2021**
(21) Anmeldenummer: 16195382.3
(22) Anmeldetag: 24.10.2016
(51) Int. Cl.: H01H 9/04, G05B 19/409, G06F 3/046

(54) **ANORDNUNG ZUM BEDIENEN EINER VORRICHTUNG, WELCHE FÜR DEN EINSATZ IN EXPLOSIONSGEFÄHRDETEN BEREICHEN AUSGEBILDET IST**
ASSEMBLY FOR OPERATING A DEVICE DESIGNED FOR USE IN AREAS IN DANGER OF EXPLOSION
SYSTÈME DE COMMANDE D'UN DISPOSITIF CONÇU POUR ÊTRE UTILISÉ DANS DES ATMOSPHÈRES EXPLOSIVES

(43) Veröffentlichungstag der Anmeldung: 25.04.2018
(73) Patentinhaber: VEGA Grieshaber KG, 77709 Wolfach (DE)
(72) Erfinder: Sack, Holger, 77761 Schiltach (DE); Welle, Roland, 77756 Hausach (DE)
(74) Vertreter: Patentanwälte Bauer Vorberg Kayser

(56) Entgegenhaltungen:
- WO-A1-2013/049286
- WO-A1-2016/008527
- DE-A1- 3 734 494
- US-A1- 2002 134 594
- US-A1- 2014 168 175

## Beschreibung

Die vorliegende Erfindung betrifft eine Anordnung zum Bedienen einer Vorrichtung, welche für den Einsatz in explosionsgefährdeten Bereichen ausgebildet ist. Explosionsgefährdete Bereiche sind insbesondere dort zu finden, wo explosive Substanzen gelagert werden, beispielsweise in Tankstellen, Raffinerien oder Brennstofflagern. Dort eingesetzte Vorrichtungen umfassen beispielsweise Feldgeräte, welche unter anderem bei der Füllstand-, Druck- und Grenzstandmessung verwendet werden.

Um auch strengere Vorschriften der entsprechenden Explosionsschutzklasse erfüllen zu können, wird die mechanische Betätigung der Ein- und Ausgabeeinheit von Feldgeräten durch berührungslose Betätigungen ersetzt, worunter zu verstehen ist, dass es keinen mechanischen Kontakt zwischen der Ein- und Ausgabeeinheit und beispielsweise den Fingern eines Bedieners mehr gibt. Zum Betätigen wird ein mobiles Bedienelement verwendet, beispielsweise ein Bedienstift. Hierdurch ergibt sich der Vorteil, dass die Feldgeräte und insbesondere die Ein- und Ausgabeeinheit mit einer Verkapselung hermetisch verschlossen werden können, so dass im Gegensatz zu einer mechanischen Betätigung bei der Betätigung keine Funken entstehen, die eine Explosion auslösen können. Dennoch ist eine einfache Bedienung der Feldgeräte möglich.

Derartige Feldgeräte mit einer Ein- und Ausgabeeinheit sind beispielsweise aus der DE 37 34 494 bekannt, welche eine explosionsgeschützte Ein- und Ausgabeeinheit offenbart, bei der jeweils einer Eingabetaste oder einem Eingabeabschnitt ein magnetisch betätigbarer Sensor zugeordnet und unmittelbar unterhalb dieser platziert ist. Um an der Ein- und Ausgabeeinheit eine Eingabe zu tätigen, wird ein am Bedienstift angebrachter Permanentmagnet verwendet, mit dem die Magnetfeldsensoren aktivierbar sind, wobei Änderungen des Magnetfelds infolge einer Positionsänderung des Bedienstifts überwacht und in entsprechende Bediensignale umgesetzt werden. Der Bedienstift selbst braucht nicht gesondert verkapselt werden, da eine Energieversorgung, die Funken auslösen könnte, für den Permanentmagnet nicht erforderlich ist. Eine ähnliche Anordnung ist in der DE 10 2006 044 724 A1 und der WO 2016/008527 A1 beschrieben. Tablet-Computer, welche mit einem Bedienstift bedient werden können, sind aus der US 2002/134594 A1, der WO 2013/049286 A1 und der US 2014/168175 A1 bekannt.

Anstelle des Magnetfelds können auch andere physikalische Größen überwacht und deren Änderungen zum Generieren von Bediensignalen verwendet werden kann. Änderungen der Position des Bedienstifts können beispielsweise optisch, induktiv, kapazitiv oder akustisch erfasst und in Bediensignale umgesetzt werden.

Die Vorrichtung bzw. das Feldgerät zusammen mit dem Bedienelement bilden zusammen die Anordnung zum Bedienen der Vorrichtung.

Nachteilig an derartigen Anordnungen ist, dass von unbeabsichtigten Veränderungen der physikalischen Größe, beispielsweise von einer unbeabsichtigten Bewegung des Bedienstifts in der Nähe der Ein- und Ausgabeeinheit, Fehleingaben oder sogar Fehlfunktionen der Feldgeräte ausgelöst werden können. Die Wahrscheinlichkeit derartiger Fehleingaben kann dadurch verringert werden, dass ein Bediensignal erst dann erzeugt wird, wenn der Bedienstift mindestens für eine gewisse Zeitdauer innerhalb eines Eingabeabschnitts positioniert wird. Hierdurch wird jedoch die Eingabe langwierig und mühsam.

Aufgabe der vorliegenden Erfindung ist es daher, eine Anordnung zum Bedienen einer Vorrichtung, welche für den Einsatz in explosionsgefährdeten Bereichen ausgebildet ist, zu schaffen, welche den oben genannten Nachteilen begegnet und insbesondere die Wahrscheinlichkeit von Fehleingaben verringert und dennoch eine schnelle und einfache Eingabe ermöglicht und in explosionsgefährdeten Bereichen einsetzbar ist.

Diese Aufgabe wird mit den im Anspruch 1 angegebenen Merkmalen gelöst. Vorteilhafte Ausführungsformen sind Gegenstand der Unteransprüche.

Die Erfindung betrifft eine Anordnung zum Bedienen einer Vorrichtung, welche für den Einsatz in explosionsgefährdeten Bereichen ausgebildet ist, wobei die Anordnung eine Vorrichtung, die für den Einsatz in explosionsgefährdeten Bereichen ausgebildet ist und eine Ein- und Ausgabeeinheit aufweist, mit welcher Bediensignale zum Bedienen der Vorrichtung generierbar sind, wobei die Vorrichtung eine Verkapselung aufweist, die vor der Ein- und Ausgabeeinheit angeordnet ist und ein mobiles Bedienelement umfasst, das mit der Ein- und Ausgabeeinheit zum Generieren der Bediensignale zusammenwirkt, wobei die Bediensignale unter Verwendung der Position oder der Positionsänderung des Bedienelements relativ zur Ein- und Ausgabeeinheit generiert werden, wozu das Bedienelement eine Positionssignalisierungseinheit aufweist. Ferner umfasst die Anordnung eine mit der Positionssignalisierungseinheit zusammenwirkende Erfassungseinrichtung, mit welcher die Position oder die Positionsänderung des Bedienelements relativ zur Ein- und Ausgabeeinheit erfassbar ist, wobei das Bedienelement eine Bestätigungseinrichtung zum Bestätigen der generierten Bediensignale umfasst, welche mittels eines Bestätigungsabschnitts aktivierbar ist, wobei die Erfassungseinrichtung einen einzigen Magnetfeldsensor, die Positionssignalisierungseinheit einen ersten Permanentmagnet und die Bestätigungseinrichtung einen Elektromagnet aufweist.

Vorrichtungen, welche für den Einsatz in explosionsgefährdeten Bereichen ausgebildet sind, weisen üblicherweise eine Verkapselung auf, um sie hermetisch verschließen und offene Funken vermeiden zu können. Berührungssensitive Oberflächen, wie sie bei Tablets und Smartphones verwendet werden, können für derartige Vorrichtungen nicht verwendet werden, da an den berührungssensitiven Oberflächen keine ausreichende Verkapselung realisierbar ist. Zudem sind derartige Vorrichtungen großen Beanspruchungen, beispielsweise thermischer und/oder chemischer Art ausgesetzt, denen berührungssensitive Oberflächen nicht lange standhalten können. Zudem verschmutzen derartige Vorrichtungen im Betrieb schnell, was ebenfalls zu Funktionsbeeinträchtigungen oder -ausfällen der berührungssensitiven Oberflächen führen kann.

Insofern muss das mobile Bedienelement, welches relativ zur Vorrichtung und insbesondere relativ zur Ein- und Ausgabeeinheit von einem Bediener bewegbar ist, in der Lage sein, über die Verkapselung hinweg mit der Ein- und Ausgabeeinheit so zusammenwirken zu können, dass die Position oder die Positionsänderung des Bedienelements von der Erfassungseinrichtung ermittelt werden kann. Hierzu weist das Bedienelement die Positionssignalisierungseinheit auf, die ein Signal einer wählbaren physikalischen Größe ausgibt, mit welchem auf die Position und/oder Positionsänderungen des Bedienelements relativ zur Ein- und Ausgabeeinheit geschlossen werden kann. Die Positionssignalisierungseinheit kann beispielsweise einen Elektromagnet umfassen, der ein Magnetfeld erzeugt. Wird die Position des Bedienelements aufgrund einer Bewegung des Bedieners verändert, ändert sich auch das Magnetfeld, welches von der Erfassungseinrichtung erfasst wird. Diese Änderung der physikalischen Größe kann zum Generieren von Bediensignalen verwendet werden. Wird beispielsweise das Bedienelement für eine bestimmte Zeit auf einen Eingabeabschnitt der Ein- und Ausgabeeinheit gehalten, welcher einem Buchstaben oder einer Zahl zugeordnet ist, kann dies als Wunsch des Bedieners interpretiert werden, diesen Buchstaben oder diese Zahl einzugeben.

Ein Aspekt der vorliegenden Erfindung ist, dass das Bedienelement eine Aktivierungseinheit aufweist, mit welcher die Positionssignalisierungseinheit ein- und ausgeschaltet werden kann. Hierdurch hat der Bediener die Möglichkeit, den Beginn und das Ende eines Eingabewunsches festzulegen. Bedienelemente, die aus dem Stand der Technik bekannt sind und einen Permanentmagnet aufweisen, bieten diese Möglichkeit nicht, sondern sind immer aktiv, weshalb bei diesen Bedienelementen die eingangs beschriebenen unbeabsichtigten Fehleingaben und Fehlfunktionen sehr wahrscheinlich sind. Im Gegensatz dazu ist vorschlagsgemäß vorgesehen, dass der Bediener die Positionssignalisierungseinheit aktivieren muss, um eine Eingabe zu tätigen, wodurch unbeabsichtigte Eingaben verhindert werden.

Ein weiterer Aspekt der vorliegenden Erfindung ist, insbesondere aber nicht ausschließlich die Bedienelemente, bei denen die Positionssignalisierungseinheit einen Permanentmagnet umfasst, mit einer Bestätigungseinrichtung auszustatten, mit welcher der Bediener die Möglichkeit hat, die Eingabe zu bestätigen. Für den Fall, dass die Positionssignalisierungseinheit einen Permanentmagnet umfasst, ist die Ein- und Ausgabeeinheit derart eingerichtet, dass die vom Permanentmagnet erzeugten Änderungen des von der Erfassungseinrichtung erfassten Magnetfelds nur zum Erzeugen eines Bediensignals verwendet wird, dieser aber noch bestätigt werden muss, um zum Bedienen der Vorrichtung verwendet zu werden. Hierzu weist das Bedienelement den Bestätigungsabschnitt auf, mit welchem der Bediener die Bestätigungseinrichtung aktivieren muss, um die Eingabe zu bestätigen.

Wie eingangs beschrieben, positioniert der Bediener das Bedienelement mit dem Ende, an dem der Permanentmagnet angeordnet ist, auf einen Eingabeabschnitt der Ein- und Ausgabeeinheit, welcher der gewünschten Eingabe entspricht, beispielsweise einer Ziffer. Die Ein- und Ausgabeeinheit kann derart ausgestaltet sein, dass diese Ziffer animiert dargestellt wird, womit dem Benutzer angezeigt wird, dass diese Ziffer zur Generierung eines Bediensignals auserwählt ist. Nun muss der Bediener bestätigen, dass die angezeigte Ziffer der gewünschten Eingabe entspricht. Erst dann wird die Ziffer von der Ein- und Ausgabeeinheit als Bediensignal verarbeitet. Zum Bestätigen der Eingabe muss der Bediener den Bestätigungsabschnitt betätigen.

Die Bestätigungseinrichtung kann beispielsweise so mit dem Permanentmagnet zusammenwirken, dass dieser bei Betätigung des Bestätigungsabschnitts innerhalb einer bestimmten Zeit eine bestimmte Bewegung ausführt, die vom Benutzer üblicherweise nicht ausgeführt wird, beispielsweise eine Rotation um seine eigene Achse um 360° in sehr kurzer Zeit. Alternativ oder kumulativ kann der Bestätigungsabschnitt beispielsweise einen Schiebeschalter umfassen, der mit einem weiteren Permanentmagnet verbunden ist, der beim Bestätigen vom Schiebeschalter mit verschoben wird. Hierdurch wird eine charakteristische Änderung des Magnetfelds erzeugt, welche von der Ein- und Ausgabeeinheit als Bestätigung der Eingabe interpretiert wird.

Alternativ kann eine Übermittlungseinrichtung vorgesehen sein, die bei Aktivierung der Bestätigungseinrichtung ein Bestätigungssignal an die Ein- und Ausgabeeinheit versendet. In diesem Fall kann der Bestätigungsabschnitt einen Druckschalter oder einen berührungssensitiven Abschnitt umfassen. Das Vorsehen eines Bestätigungsabschnitts verringert die Wahrscheinlichkeit einer Fehlbedienung, ohne dass die Bedienung erschwert wird.

In einer alternativen Ausführungsform kann die Aktivierungseinrichtung am Bedienelement angeordnet und relativ zum Bedienelement bewegbar und die Positionssignalisierungseinheit infolge der Relativbewegung ein- und ausschaltbar sein. Der Bediener, welcher das Bedienelement in seiner Hand hält, kann sehr bequem die Aktivierungseinrichtung mit einer entsprechenden Bewegung betätigen, wenn er eine Eingabe tätigen will. Hierdurch wird eine einfache und intuitive Bedienung der Vorrichtung und insbesondere des Feldgeräts möglich.

Bei einer anderen Ausführungsform kann das Bedienelement stabförmig ausgestaltet sein. In dieser Ausführungsform kann das Bedienelement als Bedienstift ausgebildet sein, der gut in der Hand liegt und mit dem sehr präzise auf einen Abschnitt der Ein- und Ausgabeeinheit gezeigt werden kann. Das Generieren von Bediensignalen wird aufgrund der stabförmigen Ausgestaltung sehr einfach und präzise.

Bei einer weiteren Ausführungsform kann das Bedienelement als Fingerring ausgestaltet sein. Der Bediener, der in explosionsgefährdeten Bereichen arbeitet, verrichtet dort in der Regel Tätigkeiten, bei welchen er beide seiner Hände benötigt. Ist das Bedienelement als Fingerring ausgeführt, hat der Bediener das Bedienelement immer einsatzbereit, ohne dass es ihn bei der sonstigen Arbeit stört. Insbesondere ist das Bedienelement in der Ausführungsform als Fingerring weitgehend verliersicher, so dass ein zeitaufwendiges Suchen nach im explosionsgefährdeten Bereich abgelegten Bedienelementen entfällt.

Eine Ausführungsform zeichnet sich dadurch aus, dass das Bedienelement als ein Handschuh ausgebildet ist. Aufgrund von Vorschriften, welche die Sicherheit des Bedieners während seiner Arbeit erhöhen sollen, kann es vorgeschrieben sein, dass der Bediener Handschuhe tragen muss. Wenn das Bedienelement als Handschuh ausgebildet ist, wird ebenfalls die Wahrscheinlichkeit verringert, dass der Bediener das Bedienelement unbeabsichtigt im explosionsgefährdeten Bereich zurücklässt und nach ihm suchen muss. Zudem werden in dieser Ausführungsform den Anforderungen des Arbeitsschutzes Rechnung getragen, ohne dass der Bediener bei der sonstigen Arbeit vom Bedienelement gestört wird. Die Positionssignalisierungseinheit kann in den Textilstoff des Handschuhs eingewebt sein, ohne die Flexibilität des Handschuhs zu verringern, beispielsweise mittels flexibler Leiterplatten.

Für den Fall, dass das Bedienelement als Handschuh ausgestaltet ist, können die Positionssignalisierungseinheit in einem Handschuhfinger und der Bestätigungsabschnitt in einem anderen Handschuhfinger angeordnet sein. Der Bestätigungsabschnitt hat die Funktion einer Eingabetaste. Wird der Bestätigungsabschnitt aktiviert, wird hierdurch die gewünschte Eingabe bestätigt. Dies kann je nach Ausführung durch Betätigen des Tasters oder Berühren des Bestätigungsabschnitts geschehen. Im Falle eines Handschuhs kann dies beispielsweise dadurch geschehen, dass der Bediener die Fingerkuppen aneinander führt, welche sich in den entsprechend ausgestalteten Handschuhfingern befinden.

Bei einer weiteren Ausführungsform umfasst die Aktivierungseinrichtung einen Drucktaster. Die Ein- und Ausgabeeinheit ist zweckmäßigerweise hinter einer durchsichtigen Verkapselung angeordnet, die beispielsweise aus einem entsprechenden Glas oder Plexiglas gefertigt ist. Der Bediener kann das Bedienelement über den gewünschten Eingabeabschnitt der Ein- und Ausgabeeinheit positionieren und auf die durchsichtige Verkapselung drücken, wodurch die Aktivierungseinheit aktiviert und die Positionssignalisierungseinrichtung eingeschaltet wird. Infolgedessen ist die Generierung der Bediensignale sehr einfach und intuitiv. Der Drucktaster kann sowohl im Bedienstift als auch im Handschuh, insbesondere in der Spitze eines Handschuhfingers, integriert werden.

In einer alternativen Ausführungsform ist der Drucktaster federgelagert. Um die Positionssignalisierungseinheit zu aktivieren, muss der Bediener Druck auf den Drucktaster ausüben, beispielsweise, wie oben beschrieben, dadurch, dass er den Bedienstift oder den Handschuh, vorzugsweise mit der Spitze des Zeigefingers, auf die Verkapselung der Ein- und Ausgabeeinheit drückt. Sobald er das Bedienelement von der Ein- und Ausgabeeinheit entfernt, wird aufgrund der Federlagerung die Positionssignalisierungseinheit deaktiviert, ohne dass der Bediener aktiv tätig werden muss. Folglich wird verhindert, dass die Positionssignalisierungseinheit dauerhaft aktiviert bleibt, wodurch unbeabsichtigte Eingaben erzeugt werden können.

In einer weiteren Ausführungsform umfasst die Aktivierungseinrichtung einen Schiebeschalter oder einen Drehschalter. Ist das Bedienelement stabförmig ausgebildet, bietet sich ein Schiebeschalter an, während für den Fingerring ein Drehschalter geeigneter ist. In beiden Fällen lässt sich die die Positionssignalisierungseinheit sehr ergonomisch ein- und ausschalten.

Erfindungsgemäß weist die Erfassungseinrichtung einen einzigen Magnetfeldsensor, die Positionssignalisierungseinheit einen ersten Permanentmagnet und die Bestätigungseinrichtung einen Elektromagnet auf. Da Permanentmagnete nicht ein- und ausgeschaltet werden können, eignen sie sich insbesondere dazu, einen Mauszeiger auf der Ein- und Ausgabeeinheit zu steuern, wozu die Positionsänderungen des Bedienelements vom Magnetfeldsensor erfasst und in eine entsprechende Verschiebung des Mauszeigers umgesetzt werden. Der Elektromagnet dient dazu, die Eingabe zu bestätigen. Wird er aufgrund der Aktivierung der Bestätigungseinrichtung bestromt, ändert sich das vom Magnetfeldsensor erfasste Magnetfeld auf eine charakteristische Weise, welche von der Ein- und Ausgabeeinheit als Bestätigung der Eingabe interpretiert wird.

In einer anderen Ausführungsform weist die Erfassungseinrichtung einen Magnetfeldsensor und die Positionssignalisierungseinheit einen Elektromagnet auf. Wie eingangs erwähnt, werden bei Feldgeräten nach dem Stand der Technik häufig Ein- und Ausgabeeinheiten eingesetzt, welche auf die Änderung des Magnetfelds reagieren. Wenn die Positionssignalisierungseinheit einen Elektromagnet aufweist, kann auf diese Technik aufgesetzt werden, so dass die konstruktiven Änderungen, um die vorliegende Anordnung zu realisieren, sehr gering sind. Zudem kann eine einfache Nachrüstung bestehender Anordnungen realisiert werden.

Weiterhin kann das Bedienelement einen Permanentmagnet aufweisen. Da für die Aktivierung eines Elektromagnets ein Energiespeicher benötigt wird, beispielsweise eine Batterie, kann es vorkommen, dass sich diese im Betrieb entleert und der Elektromagnet nicht mehr aktiviert werden kann. Der Permanentmagnet schafft hier eine Redundanz und wird so am Bedienelement angeordnet, dass er die Eingabe bei aktiviertem Elektromagnet nicht stört. Ist das Bedienelement stabförmig ausgestaltet, kann der Permanentmagnet an dem Ende des Bedienelements angeordnet sein, welches im Normalbetrieb der Ein- und Ausgabeeinheit abgewandt ist.

Der Permanentmagnet kann aber nicht nur dann zum Einsatz kommen, wenn der Elektromagnet nicht mehr aktivierbar ist. Mit Hilfe des Permanentmagnets kann eine "Radierfunktion" umgesetzt werden, mit der fehlerhafte Eingaben durch Umdrehen des stabförmigen Bedienelements intuitiv und schnell entfernt werden können. Hierzu kann der Magnetfeldsensor der Ein- und Ausgabeeinheit die Polarität des Permanentmagnets (Nordpol, Südpol) berücksichtigen, so dass die Radierfunktion nur dann aktiviert wird, wenn das Bedienelement umgedreht wird und ausreichend nah an der Ein- und Ausgabeeinheit positioniert ist. Fehleingaben werden hierdurch vermieden.

Die Ein- und Ausgabeeinheit kann weiterhin so konfiguriert sein, dass die Berücksichtigung der Polarität aufgehoben werden kann. Dies bietet sich an, wenn keine Energie mehr für den Elektromagnet zur Verfügung steht. Dann kann auch das umgedrehte Bedienelement für die normale Eingabe verwendet werden.

An dieser Stelle sei angemerkt, dass erfindungsgemäß das Bedienelement keine Aktivierungseinrichtung aufweist, da die Positionssignalisierungseinheit nicht ein- oder ausschaltbar ist, wie es bei einem Permanentmagnet der Fall ist. Aber auch in diesem Fall kann das Bedienelement einen weiteren Permanentmagnet aufweisen, der aber keine Redundanz darstellt, jedoch zur Umsetzung der Radierfunktion verwendet werden kann.

Ein Beispiel, das kein Teil der Erfindung ist und das Verständnis der Erfindung erleichtert, ist, dass die Positionssignalisierungseinheit einen Beschleunigungssensor zum Generieren von Beschleunigungssignalen und eine Übermittlungseinrichtung zum Übermitteln der Beschleunigungssignale an die Erfassungseinrichtung umfasst. Da das Magnetfeld, welches vom Bedienelement erzeugt wird, üblicherweise räumlich begrenzt ist, muss das Bedienelement relativ nahe an die Erfassungseinrichtung herangeführt werden, damit das Magnetfeld verändert wird und Positionsänderungen des Bedienelements erfasst werden können. Im Gegensatz dazu kann die Übermittlungseinrichtung so ausgestaltet werden, dass die Beschleunigungssignale auch über eine weitere Strecke übertragen werden können. Hierdurch kann die Bedienung der Vorrichtung weiter vereinfacht werden. In explosionsgefährdeten Bereichen kommt es durchaus vor, dass Geräte eingesetzt werden, welche selbst ein Magnetfeld erzeugen, welche sich störend auf das Magnetfeld auswirken und eine Eingabe mit Elektro- und/oder Permanentmagneten erschweren oder gar unmöglich machen. Aufgrund der Verwendung von Beschleunigungssignalen wirken sich diese Störungen nicht negativ auf die Eingabe aus.

Beispielhafte Ausführungsformen der Erfindung werden im Folgenden unter Bezugnahme auf die beigefügten Zeichnungen näher erläutert. Es zeigen
- Figur 1a): eine Vorrichtung nach dem Stand der Technik, welche für den Einsatz in explosionsgefährdeten Bereichen ausgebildet ist,
- Figur 1b): ein aus dem Stand der Technik bekanntes Bedienelement, mit welcher die in Figur 1a) gezeigte Vorrichtung bedient werden kann,
- Figur 2a): eine beispielhafte Vorrichtung, welche für den Einsatz in explosionsgefährdeten Bereichen ausgebildet ist, die kein Teil der Erfindung ist und das Verständnis der Erfindung erleichtert,
- Figur 2b): ein erstes Beispiel eines Bedienelements, das kein Teil der Erfindung ist und das Verständnis der Erfindung erleichtert,
- Figur 2c): ein zweites Beispiel eines Bedienelements, das kein Teil der Erfindung ist und das Verständnis der Erfindung erleichtert,
- Figur 2d): ein erstes Ausführungsbeispiel eines erfindungsgemäßen Bedienelements,
- Figur 2e): ein zweites Ausführungsbeispiel eines erfindungsgemäßen Bedienelements,
- Figur 2f): ein drittes Beispiel eines Bedienelements, das kein Teil der Erfindung ist und das Verständnis der Erfindung erleichtert,
- Figur 3a): eine erfindungsgemäße Vorrichtung nach einem ersten Ausführungsbeispiel, welche für den Einsatz in explosionsgefährdeten Bereichen ausgebildet ist,
- Figur 3b): ein drittes Ausführungsbeispiel eines erfindungsgemäßen Bedienelements,
- Figur 3c): ein viertes Ausführungsbeispiel eines erfindungsgemäßen Bedienelements,
- Figur 3d): ein fünftes Ausführungsbeispiel eines erfindungsgemäßen Bedienelements, und
- Figur 3e): ein sechstes Ausführungsbeispiel eines erfindungsgemäßen Bedienelements, jeweils anhand von prinzipiellen Draufsichten.

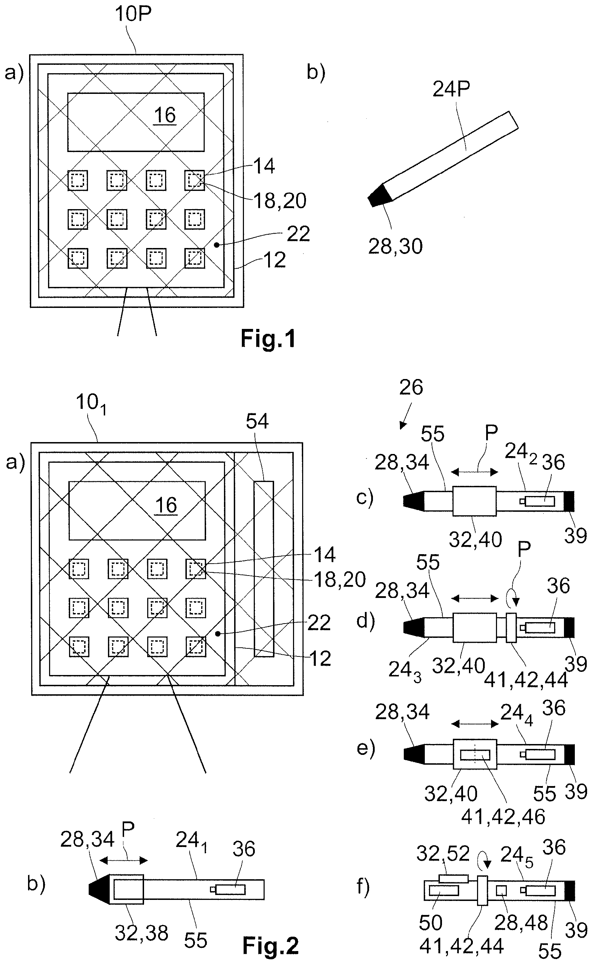

In Figur 1a) ist eine Vorrichtung 10 dargestellt, welche für den Einsatz in explosionsgefährdeten Bereichen ausgebildet ist. Die Vorrichtung 10 weist eine Ein- und Ausgabeeinheit 12 auf, wobei die Ein- und Ausgabeeinheit 12 im dargestellten Ausführungsbeispiel zwölf Eingabeabschnitte 14 aufweist. Rein beispielhaft können zehn der zwölf Eingabeabschnitte 14 den Ziffern 0 bis 9 und die beiden übrigen einer Eingabetaste und einer Löschtaste zugeordnet sein, wozu die entsprechenden Symbole in den Eingabeabschnitten 14 hinterlegt sind. Alternativ oder kumulativ können die Eingabeabschnitte 14 bestimmten Funktionen der Vorrichtung 10 zugeordnet sein. Auch ist es denkbar, so viele Eingabeabschnitte 14 vorzusehen, dass eine komplette Tastatur, wie sie bei PCs verwendet wird, nachgebildet werden kann. Die Ein- und Ausgabeeinheit 12 weist ein Display 16 auf, mit welchem die getätigten Eingaben angezeigt werden kann, beispielsweise eine Buchstaben- und/oder eine Zahlenabfolge.

Weiterhin weist die Ein- und Ausgabeeinheit 12 eine Erfassungseinrichtung 18 auf, welche im dargestellten Ausführungsbeispiel eine Anzahl von Magnetfeldsensoren 20 umfasst, wobei die Anzahl derjenigen Anzahl der Eingabeabschnitte 14 entspricht. Die Magnetfeldsensoren 20 sind bezogen auf die Darstellungsebene der Figur 1a) hinter den Eingabeabschnitten 14 angeordnet.

Da die Vorrichtung 10 für den Einsatz in explosionsgefährdeten Bereichen ausgebildet ist, weist sie eine Verkapselung 22 auf, welche bezogen auf die Darstellungsebene vor der Ein- und Ausgabeeinheit 12 angeordnet ist und dort transparent, beispielsweise unter Verwendung einer Platte aus Glas oder Plexiglas, ausgeführt ist, so dass die Ein- und Ausgabeeinheit 12 für den Bediener sichtbar ist. Die Verkapselung 22 ist symbolisch mittels einer Kreuzschraffierung dargestellt.

In Figur 1b) ist ein aus dem Stand der Technik bekanntes Bedienelement 24P dargestellt, mit welchem die Vorrichtung 10 bedient werden kann. Das Bedienelement 24P und die Vorrichtung 10 bilden zusammen eine Anordnung 26 zum Bedienen der Vorrichtung 10. Das Bedienelement 24P ist stabförmig ausgebildet und weist eine Positionssignalisierungseinheit 28 auf, die als ein an einem Ende des Bedienelements 24P angeordneter Permanentmagnet 30 ausgebildet ist.

Zum Bedienen der Vorrichtung 10 ergreift ein nicht dargestellter Bediener das Bedienelement 24P und führt es zu der Ein- und Ausgabeeinheit 12 hin. Um beispielsweise eine Zahl einzugeben, richtet der Bediener das Bedienelement 24P mit dem Ende, an welchem der Permanentmagnet 30 angeordnet ist, auf den Eingabeabschnitt 14, welcher der einzugebenden Ziffer zugeordnet ist. Aufgrund der Annäherung des Permanentmagnets 30 an den Magnetfeldsensor 20, der hinter dem Eingabeabschnitt 14 angeordnet ist, ändert sich das vom Magnetfeldsensor 20 erfasste Magnetfeld. Diese Änderung wird von der Ein- und Ausgabeeinheit 12 als Eingabe der entsprechenden Ziffer interpretiert.

Ist die Ziffer, welche der Bediener eingeben will, dem linken oberen Eingabeabschnitt 14 zugeordnet und will der Bediener die Eingabe durch Betätigen der Eingabetaste bestätigen, die beispielsweise dem rechten unteren Eingabeabschnitt 14 zugeordnet ist, so wird der Bediener das Bedienelement 24P intuitiv quer über die Ein- und Ausgabeeinheit 12 ziehen, wobei er den Permanentmagnet 30 auch über benachbarte Magnetfeldsensoren 20 führt. Hierdurch kann es zu ungewollten Eingaben kommen.

In Figur 2a) ist ein erstes Beispiel, das kein Teil der Erfindung ist und das Verständnis der Erfindung erleichtert, für eine Vorrichtung 10₁ dargestellt, welche für den Einsatz in explosionsgefährdeten Bereichen ausgebildet ist, die im Wesentlichen genauso aufgebaut ist, wie die in Figur 1a) dargestellte Vorrichtung 10.

In Figur 2b) ist ein erstes Beispiel, das kein Teil der Erfindung ist und das Verständnis der Erfindung erleichtert, für ein Bedienelement 24₁ dargestellt, welches wie auch das in Figur 1b) dargestellte Bedienelement 24P stabförmig ausgebildet ist. Allerdings weist das Bedienelement 24₁ eine Aktivierungseinrichtung 32 auf, mit welcher die Positionssignalisierungseinheit 28 ein- und ausgeschaltet werden kann. Im Kontext der vorliegenden Erfindung soll unter einem Ein- und Ausschalten der Positionssignalisierungseinheit 28 insbesondere auch jegliche Art der Änderung der von der Aktivierungseinrichtung 32 und/oder Positionssignalisierungseinheit 28 beeinflussten physikalischen Größe verstanden werden. So kann vorgesehen sein, durch ein Betätigen der Aktivierungseinrichtung 32 eine Positionssignalisierungseinheit 28 derart zu beeinflussen, dass eine physikalische Größe, beispielsweise ein Magnetfeld, in Bezug auf seine Polarisierung, Amplitude, Frequenz und/oder anderen Größen verändert wird. Die Positionssignalisierungseinheit 28 ist als ein nicht näher dargestellter Elektromagnet 34 ausgebildet, der mit einem Energiespeicher 36, beispielsweise eine Batterie, mit dort gespeicherter elektrischer Energie versorgt werden kann, wenn die Aktivierungseinrichtung 32 betätigt wird. Der Elektromagnet 34 ist an einem Ende des Bedienelements 24₁ angeordnet. Die Aktivierungseinrichtung 32 umfasst einen federgelagerten Drucktaster 38, der entlang der mit dem Pfeil P gekennzeichneten Richtung verschoben werden kann. Aufgrund der Federlagerung wird der Drucktaster 38 in eine Ausgangsposition vorgespannt. Solange kein Druck auf den Drucktaster 38 ausgeübt wird, ist der Energiespeicher 36 vom Elektromagnet 34 getrennt, so dass der Elektromagnet 34 kein Magnetfeld aufbauen kann. Richtet der Bediener das Bedienelement 24₁ auf den Eingabeabschnitt 14, welcher der gewünschten Ziffer zugeordnet ist, und drückt das Bedienelement 24₁ mit dem Ende, an welchem der Elektromagnet 34 angeordnet ist, gegen die transparente Verkapselung 22, wird der Energiespeicher 36 mit dem Elektromagnet 34 verbunden und es wird ein Magnetfeld aufgebaut, welches vom Magnetfeldsensor 20 erfasst und von der Ein- und Ausgabeeinheit 12 in eine entsprechende Eingabe umgewandelt wird. Sobald der Bediener das Bedienelement 24₁ von der Verkapselung 22 entfernt und folglich kein Druck mehr auf den Drucktaster 38 wirkt, wird er infolge der gefederten Lagerung wieder in die Ausgangsposition zurück geschoben, wodurch der Energiespeicher 36 vom Elektromagnet 34 getrennt und das Magnetfeld abgebaut wird. Auch wenn der Bediener das Bedienelement 24₁ quer über die Ein- und Ausgabeeinheit 12 zieht, wird keine Eingabe bewirkt, wenn nicht der notwendige Druck zum Betätigen des Drucktasters 38 vom Bediener erzeugt wird.

Der Druck, welcher vom Bediener auf den Drucktaster 38 aufgebracht wird, kann auch in elektrische Energie umgewandelt werden, beispielsweise mittels eines nicht dargestellten Piezoelements. Mit dieser elektrischen Energie kann der Energiespeicher 36 geladen werden. Es kann auch vorgesehen sein, die infolge des Drückens bereitgestellte Energie direkt zum Betrieb der Aktivierungseinrichtung 32 zu verwenden und somit auf den Energiespeicher 36 zu verzichten.

In Figur 2c) ist ein zweites Beispiel, das kein Teil der Erfindung ist und das Verständnis der Erfindung erleichtert, für ein Bedienelement 24₂ gezeigt. Das Bedienelement 24₂ ist ebenfalls stabförmig ausgestaltet, wobei die Aktivierungseinrichtung 32 einen Schiebeschalter 40 umfasst, welcher entlang der mit dem Pfeil P gekennzeichneten Richtung verschiebbar ist. Um eine Eingabe tätigen zu können, muss der Bediener den Schiebeschalter 40 aus der Ausgangsposition in eine Aktivierungsposition verschieben, wodurch der Elektromagnet 34 bestromt wird. Der Schiebeschalter 40 kann federgelagert sein, so dass der Bediener den Schiebeschalter 40 in der Aktivierungsposition halten muss, um eine Eingabe tätigen zu können. Sobald er den Schiebeschalter 40 loslässt, wird dieser wieder in die Ausgangsposition verschoben, so dass keine Eingabe mehr getätigt werden kann. Es ist aber auch möglich, den Schiebeschalter 40 so auszugestalten, dass er in der Ausgangs- oder Aktivierungsposition verbleibt. Der Bediener kann den Schiebeschalter 40 in der Aktivierungsposition loslassen, ohne dass er wieder in die Ausgangsposition zurück verschoben wird. Ist die Eingabe beendet, kann er den Schiebeschalter 40 wieder in die Ausgangsposition schieben.

Das Bedienelement 24₂ weist weiterhin einen zweiten Permanentmagnet 39 auf, welcher am dem Elektromagnet 34 gegenüberliegenden Ende des Bedienelements 24₂ angeordnet ist. Der zweite Permanentmagnet 39 kann als Redundanz für den Fall verwendet werden, dass der Energiespeicher 36 versiegt und der Elektromagnet 34 nicht mehr bestromt werden kann. Alternativ oder ergänzend kann der Permanentmagnet 30 auch zum Löschen einer Eingabe verwendet werden, wozu die Polarität des zweiten Permanentmagnets 39 genutzt werden kann, um das vom zweiten Permanentmagnet 39 aufgebaute Magnetfeld vom Magnetfeld zu unterscheiden, welches vom Elektromagnet 34 erzeugt wird. Es kann vorgesehen sein, dass zum Löschen einer Eingabe das Bedienelement 24₂ umgedreht und zum Eingabeabschnitt 14 geführt wird. Es kann auch vorgesehen sein, dass ein Löschen einer Benutzereingabe durch ein Betätigen einer zweiten Aktivierungseinrichtung 32 unter Auslassung oder Verwendung eines Permanentmagnets erfolgt. Hierbei kann insbesondere vorgesehen sein, dass beim Betätigen einer zweiten Aktivierungseinrichtung 32 ein Magnetfeld, in Bezug auf seine Polarisierung, Amplitude, Frequenz und/oder anderen Größen verändert wird.

In Figur 2d) ist ein erstes Ausführungsbeispiel eines erfindungsgemäßen Bedienelements 24₃ dargestellt, welches weitgehend ähnlich zu dem in Figur 2c) dargestellten Bedienelement 24₂ aufgebaut ist, zusätzlich aber noch eine Bestätigungseinrichtung 41 mit einem Bestätigungsabschnitt 42 aufweist, der einen ringförmigen Drehschalter 44 umfasst. Die Bestätigung einer Eingabe erfolgt durch Drehen des Drehschalters 44 und kann beispielsweise dadurch der Erfassungseinrichtung 18 bzw. der Ein- und Ausgabeeinheit 12 mitgeteilt werden, dass der Elektromagnet 34 in einer bestimmten Frequenz ein- und ausgeschaltet wird. Auf diese Art und Weise kann es ermöglicht werden, mehrere Positionen des Drehschalters 44 an die Ein- und Ausgabeeinheit 12 zu übermitteln, und zur Eingabe von Benutzervorgaben zu verwenden. Es kann auch vorgesehen sein, dass ein numerischer Wert durch ein Vor- bzw. Zurückdrehen des Drehschalters 44 interaktiv verändert werden kann.

In Figur 2e) ist ein zweites Ausführungsbeispiel eines erfindungsgemäßen Bedienelements 24₄ dargestellt, welches weitgehend ähnlich zu dem in Figur 2c) dargestellten Bedienelement 24₄ aufgebaut ist, zusätzlich jedoch umfasst der Bestätigungsabschnitt 42 ein Rollrad 46, mit welchem die Eingabe bestätigt werden kann. Das Rollrad 46 ist dem Drehschalter 44 des ersten Ausführungsbeispiels ähnlich, ist jedoch um eine Achse drehbar gelagert, welche quer zur Längsachse des stabförmigen Bedienelements 24₄ verläuft.

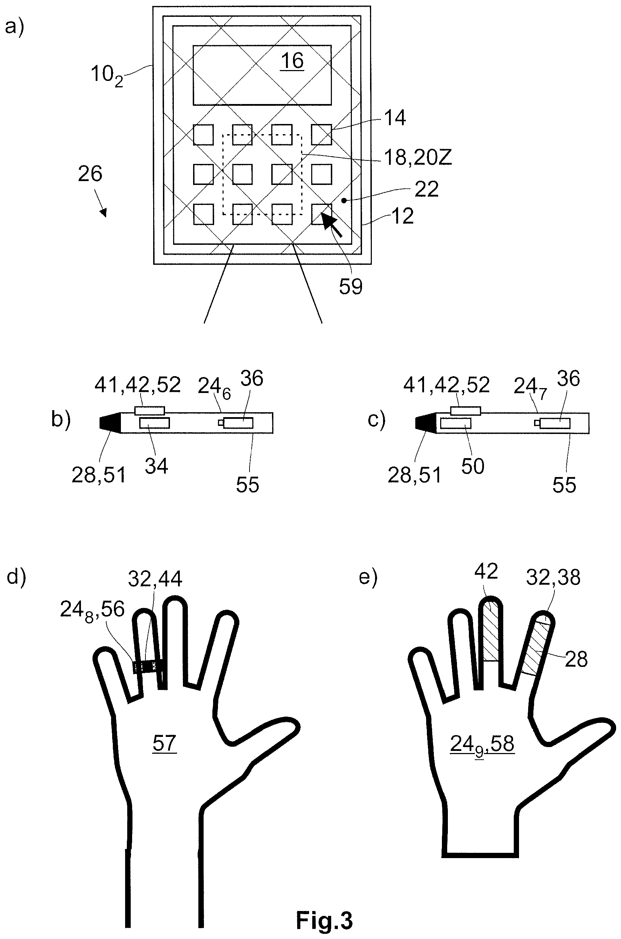

In Figur 2f) ist ein drittes Beispiel, das kein Teil der Erfindung ist und das Verständnis der Erfindung erleichtert, für ein Bedienelement 24₅ dargestellt, welches, wie auch das erste Ausführungsbeispiel, einen Drehschalter 44 aufweist, um eine Eingabe zu bestätigen. Allerdings umfasst in diesem Ausführungsbeispiel die Positionssignalisierungseinheit 28 keinen Elektromagnet, sondern einen Beschleunigungssensor 48 zum Generieren von Beschleunigungssignalen und eine Übermittlungseinrichtung 50 zum Übermitteln der Beschleunigungssignale an die Erfassungseinrichtung. Ferner weist die Aktivierungseinrichtung 32 einen Druckschalter 52 auf, mit welchem die Übermittlungseinrichtung 50 aktiviert werden kann. Unter Verwendung der Beschleunigungssignale kann ein auf der ein- und Ausgabeeinheit 12 angezeigter Mauszeiger 59 mit den Bewegungen des Bedienelements 24₅ gesteuert werden (vgl. Figur 3a)). Befindet sich der Mauszeiger 59 im gewünschten Eingabebereich, kann der Drehschalter 44 zur Bestätigung der Eingabe betätigt werden. Dabei kann die Übermittlungseinrichtung 50 so ausgestaltet sein, dass sie die Beschleunigungssignale auch über größere Entfernungen an die Erfassungseinrichtung 18 übermitteln kann, so dass das Bedienelement 24₅ zum Bedienen der Vorrichtung 10 auch deutlich beabstandet von der Ein- und Ausgabeeinheit 12 positioniert werden kann. Die Beschleunigungssignale sowie Signale, welche die Bestätigung einer Eingabe an die Ein- und Ausgabeeinheit 12 übermitteln, können beispielsweise optisch, akustisch und/oder elektrostatisch übertragen werden.

Die Bedienelemente 24 nach den oben beschriebenen zwei Ausführungsbeispielen sind stabförmig aufgebaut. Da sie alle einen Energiespeicher 36 benötigen, weist die Vorrichtung 10 eine Lademulde 54 auf, in welche die Bedienelemente 24 eingebracht werden können. Die Lademulde 54 definiert einerseits einen Lagerplatz, wo die Bedienelemente 24 gelagert werden können, wenn sie nicht benötigt werden. Andererseits kann der Energiespeicher 36 während des Lagerns aufgeladen werden. Das Laden kann drahtgebunden oder drahtlos erfolgen.

Es kann auch vorgesehen sein, dass die Ein- und Ausgabeeinheit 12 die Energie zum Betrieb des Bedienelements 24 während der Eingabe überträgt, beispielsweise mittels einer Induktion. Ferner kann infolge des Einschaltens der Aktivierungseinrichtung 32 ein Schalter geschlossen werden, welcher die Charakteristik eines im Bedienelement 24 angeordneten passiven Schwingkreises verändert. Darüber hinaus kann eine Unwucht innerhalb des Bedienelements 24 angeordnet sein. Diese Maßnahmen dienen dazu, elektrische Energie zur Verfügung zu stellen, mit welcher der Energiespeicher 36 geladen werden kann. Da bei der Übertragung von elektrischer Energie Funken entstehen können, weisen die gezeigten Ausführungsbeispiele des Bedienelements 24 eine Verkapselung 55 auf.

Alternativ kann die so bereitgestellte elektrische Energie auch direkt zum Betreiben des Bedienelements 24 verwendet werden, so dass keine gesonderten Energiespeicher benötigt werden. Wenn die elektrische Energie derart zur Verfügung gestellt wird, dass keine Funken entstehen können, kann auf die Verkapselung verzichtet werden.

In Figur 3a) ist ein erstes Ausführungsbeispiel einer erfindungsgemäßen Vorrichtung 10₂ dargestellt, welche für den Einsatz in explosionsgefährdeten Bereichen ausgebildet ist. Im Gegensatz zum ersten Beispiel weist die Erfassungseinrichtung 20 nur einen zentralen Magnetfeldsensor 20Z auf, der insbesondere dazu geeignet ist, relative Veränderungen der Position des Bedienelements 24 zu erfassen.

In Figur 3b) ist ein drittes Ausführungsbeispiel eines erfindungsgemäßen Bedienelements 24₆ dargestellt, bei welchem die Positionssignalisierungseinheit 28 einen ersten Permanentmagnet 51 umfasst, wie es auch bei dem aus dem Stand der Technik bekannten Bedienelement 24P, welches in Figur 1b) dargestellt ist, der Fall ist. Allerdings weist das Bedienelement 24₆ im sechsten Ausführungsbeispiel keine Aktivierungseinrichtung 32, sondern eine Bestätigungseinrichtung 41 auf, welche mittels eines Bestätigungsabschnitts 42 aktivierbar ist, der beispielsweise einen Drucktaster 52 umfassen kann. Die Bestätigungseinrichtung 41 umfasst einen Elektromagnet 34, der durch Betätigen des Bestätigungsabschnitts 42 vom Energiespeicher 36 bestromt wird. Wird die Bestätigungseinrichtung 41 aktiviert, ändert sich das vom zentralen Magnetfeldsensor 20Z erfasste Magnetfeld auf eine Weise, die sich mit einer Positionsänderung des Bedienelements 24 nicht bewirkt werden kann. Diese Änderung des Magnetfelds wird als Eingabebestätigung aufgefasst.

Nicht dargestellt ist eine Ausführungsform, in welcher die Bestätigungseinrichtung 41 beispielsweise eine Drehung des ersten Permanentmagnets 51 oder die Verschiebung eines weiteren Permanentmagnets bewirkt, wodurch ebenfalls das vom zentralen Magnetfeldsensor 20Z erfasste Magnetfeld auf eine charakteristische Weise geändert wird, die von der Ein- und Ausgabeeinheit 12 als Bestätigung der Eingabe interpretiert wird. In diesem Fall kann auf einen Energiespeicher verzichtet werden, wodurch keine besonderen Vorkehrungen getroffen werden müssen, um das Bedienelement 24 in explosionsgefährdeten Bereichen einzusetzen.

In Figur 3c) ist ein viertes Ausführungsbeispiel eines erfindungsgemäßen Bedienelements 24₇ dargestellt, bei welchem die Positionssignalisierungseinheit 28 wie auch im dritten Ausführungsbeispiel einen ersten Permanentmagnet 51 umfasst. Weiterhin weist das Bedienelement 24₇ eine Übermittlungseinrichtung 50 auf, mit welcher die Aktivierung der Bestätigungseinrichtung 41 an die Ein- und Ausgabeeinheit 12 übermittelt werden kann. Die Übermittlungseinrichtung 50 wird vom Energiespeicher 36 mit elektrischer Energie versorgt.

Die Bedienelemente 24₆ und 24₇ eignet sich insbesondere zur Verwendung der Vorrichtung 10₂ nach dem zweiten Ausführungsbeispiel. Da die Positionssignalisierungseinheit 28, die den ersten Permanentmagnet 51 umfasst, nicht ein- und ausgeschaltet werden kann, bietet es sich an, mit den Änderungen der Position des Bedienelements 24 einen Mauszeiger 59 auf der Ein- und Ausgabeeinheit 12 zu steuern (siehe Figur 3a)). Wie bereits erwähnt, eignet sich der zentrale Magnetfeldsensor 20Z insbesondere dazu, Änderungen des Magnetfelds zu erfassen. Bei Initialisierung der Ein- und Ausgabeeinheit 12 wird der Mauszeiger 59 in eine Ausgangsposition gestellt, beispielsweise in das Zentrum der Ein- und Ausgabeeinheit 12. Sobald das Bedienelement 24₆ ausreichend nah an den zentralen Magnetfeldsensor 20Z positioniert wird, dass dieser Änderungen im Magnetfeld, die von ersten Permanentmagnet 51 hervorgerufen werden, erfassen kann, werden Positionsänderungen des Bedienelements 24₆ oder 24₇ in eine entsprechende Verschiebung des Mauszeigers 59 umgesetzt. Wird der Mauszeiger 59 in einen Eingabeabschnitt 14 positioniert, welcher die gewünschte Eingabe repräsentiert, beispielsweise eine Ziffer, kann der Bediener durch Betätigen des Bestätigungsabschnitts 42 die Betätigungseinrichtung 42 aktivieren und die Eingabe bestätigen. Dabei kann der betreffende Eingabeabschnitt 14 animiert werden, um den Bediener optisch mitzuteilen, in welchem Eingabeabschnitt 14 der Mauszeiger 59 gerade positioniert ist.

Im Vergleich zu der Vorrichtung 10₁ nach dem ersten Beispiel hat die Verwendung des zentralen Magnetfeldsensors 20Z den Vorteil, dass die Anzahl und Anordnung der Eingabeabschnitte 14 frei gewählt und flexibel geändert werden kann.

In Figur 3d) ist ein fünftes Ausführungsbeispiel eines erfindungsgemäßen Bedienelements 24₈ dargestellt, das als ein Fingerring 56 ausgestaltet ist, in welchem die Positionssignalisierungseinheit 28 angeordnet ist, die hier nicht näher dargestellt ist. Der Bediener kann den Fingerring 56 beispielsweise am Ringfinger seiner Hand 57 tragen.

Die Aktivierungseinrichtung 32 umfasst einen Drehschalter 44. Zum Eingeben wird der Fingerring 56 vor den entsprechenden Eingabeabschnitt 14 gehalten oder auf diesen aufgelegt und die Aktivierungseinrichtung 32 betätigt.

In Figur 3e) ist ein sechstes Ausführungsbeispiel eines erfindungsgemäßen Bedienelements 24₉ dargestellt, welches als ein Handschuh 58 ausgebildet ist. Die Positionssignalisierungseinheit 28 kann beispielsweise in Form von flexiblen Leiterplatten in das Gewebe des Handschuhs 58 eingewebt werden, hier in den Handschuhfinger des Zeigefingers. An der Kuppe des Handschuhfingers kann die Aktivierungseinrichtung 32 in Form des Drucktasters 38 angeordnet werden. Der Bediener, der den Handschuh 58 trägt, zeigt mit dem Zeigefinger auf den gewünschten Eingabeabschnitt 14 und drückt etwas auf die transparente Verkapselung 22, wodurch die Eingabe getätigt wird. Alternativ oder ergänzend weist der Handschuh 58 im Handschuhfinger des Mittelfingers den Bestätigungsabschnitt 42 auf. Eine Eingabe kann durch Berühren des Zeigefingers und des Mittelfingers bestätigt werden. Der Bestätigungsabschnitt 42 kann auch im Handschuhfinger des Daumens angeordnet sein und die Eingabe durch Berühren des Daumens und des Zeigefingers bestätigt werden. Darüber hinaus können auch die anderen Handschuhfinger mit Bestätigungsabschnitten 42 oder mit Positionssignalisierungseinheiten 28 versehen werden, wodurch es möglich ist, die Vorrichtung 10 mittels Gesten wie Wischen, Doppelklick, Blättern, Zoomen etc. zu steuern.

### Bezugszeichenliste

- 10: Vorrichtung
- 10P: Vorrichtung nach dem Stand der Technik
- 12: Ein- und Ausgabeeinheit
- 14: Eingabeabschnitt
- 16: Display
- 18: Erfassungseinrichtung

- 20: Magnetfeldsensor
- 20Z: zentraler Magnetfeldsensor
- 22: Verkapselung
- 24P: Bedienelement nach dem Stand der Technik
- 24, 24₁ - 24₉: Bedienelement
- 26: Anordnung
- 28: Positionssignalisierungseinheit

- 30: Permanentmagnet
- 32: Aktivierungseinrichtung
- 34: Elektromagnet
- 36: Energiespeicher
- 38: Drucktaster
- 39: zweiter Permanentmagnet

- 40: Schiebeschalter
- 41: Bestätigungseinrichtung
- 42: Bestätigungsabschnitt
- 44: Drehschalter
- 46: Rollrad
- 48: Beschleunigungssensor

- 50: Übermittlungseinrichtung
- 51: erster Permanentmagnet
- 52: Druckschalter
- 54: Lademulde
- 55: Verkapselung
- 56: Fingerring
- 57: Hand
- 58: Handschuh
- 59: Mauszeiger

## Patentansprüche

1. Anordnung (26) zum Bedienen einer Vorrichtung (10), welche für den Einsatz in explosionsgefährdeten Bereichen ausgebildet ist, wobei die Anordnung (26)
- eine Vorrichtung (10), die für den Einsatz in explosionsgefährdeten Bereichen ausgebildet ist und eine Ein- und Ausgabeeinheit (12) aufweist, mit welcher Bediensignale zum Bedienen der Vorrichtung (10) generierbar sind, wobei die Vorrichtung (10) eine Verkapselung (22) aufweist, die vor der Ein- und Ausgabeeinheit (12) angeordnet ist,
- ein mobiles Bedienelement (24)umfasst, das mit der Ein- und Ausgabeeinheit (12) zum Generieren der Bediensignale zusammenwirkt,
- wobei die Bediensignale unter Verwendung der Position oder der Positionsänderung des Bedienelements (24) relativ zur Ein- und Ausgabeeinheit (12) generiert werden, wozu das Bedienelement (24) eine Positionssignalisierungseinheit (28) aufweist, und
- eine mit der Positionssignalisierungseinheit (28) zusammenwirkende Erfassungseinrichtung (18) umfasst, mit welcher die Position oder die Positionsänderung des Bedienelements (24) relativ zur Ein- und Ausgabeeinheit (12) erfassbar ist,
**dadurch gekennzeichnet, dass**
das Bedienelement (24) eine Bestätigungseinrichtung (41) zum Bestätigen der generierten Bediensignale umfasst, welche mittels eines Bestätigungsabschnitts (42) aktivierbar ist, wobei die Erfassungseinrichtung (18) nur einen zentralen Magnetfeldsensor (20), die Positionssignalisierungseinheit (28) einen ersten Permanentmagnet (51) und die Bestätigungseinrichtung (41) einen Elektromagnet (34) aufweist.

2. Anordnung nach Anspruch 1, **dadurch gekennzeichnet, dass** das Bedienelement (24) und/oder die Vorrichtung (10) eine Aktivierungseinrichtung (32) aufweist, mit welcher die Positionssignalisierungseinheit (28) ein- und ausschaltbar ist.

3. Anordnung nach Anspruch 2, **dadurch gekennzeichnet, dass** die Aktivierungseinrichtung (32) am Bedienelement (24) angeordnet und relativ zum Bedienelement (24₁) bewegbar ist und die Positionssignalisierungseinheit (28) infolge der Relativbewegung ein- und ausschaltbar ist.

4. Anordnung nach einem der Ansprüche 2 oder 3, **dadurch gekennzeichnet, dass** die Aktivierungseinrichtung (32) einen Drucktaster (38) umfasst.

5. Anordnung nach Anspruch 4, **dadurch gekennzeichnet, dass** der Drucktaster (38) federgelagert ist.

6. Anordnung nach einem der Ansprüche 2 oder 3, **dadurch gekennzeichnet, dass** die Aktivierungseinrichtung (32) einen Schiebeschalter (40) oder einen Drehschalter (44) umfasst

7. Anordnung nach einem der Ansprüche 1 bis 6, **dadurch gekennzeichnet, dass** das Bedienelement (24) stabförmig ausgestaltet ist.

8. Anordnung nach einem der Ansprüche 1 bis 6, **dadurch gekennzeichnet, dass** das Bedienelement (24) als ein Fingerring ausgestaltet ist. 11

9. Anordnung nach einem der Ansprüche 1 bis 5, **dadurch gekennzeichnet, dass** das Bedienelement (24) als ein Handschuh (58) ausgebildet ist.

## Claims

1. An assembly (26) for operating a device (10) configured for use in areas subject to explosion hazards, wherein the assembly (26)
- comprises a device (10), which is configured for use in areas subject to explosion hazards and has an input and output unit (12) with which operating signals for operating the device (10) can be generated, wherein the device (10) has an encapsulation (22) disposed in front of the input and output unit (12),
- a mobile operating element (24), which cooperates with the input and output unit (12) for generating the operating signals,
wherein the operating signals are generated using the position or change of position of the operating element (24) relative to the input and output unit (12), for which purpose the operating element (24) has a position signaling unit (28), and
- comprises a detecting device (18), which cooperates with the position signaling unit (28) and with which the position or change of position of the operating element (24) relative to the input and output unit (12) can be detected,
**characterized in that**
- the operating element (24) comprises a confirmation device (41) for confirming the generated operating signals, which can be activated by means of a confirmation portion (42), wherein the detection device (18) comprises only one central magnetic field sensor (20), the position signaling unit (28) comprises a first permanent magnet (51), and the confirmation device (41) comprises an electromagnet (34).

2. The assembly according to claim 1, **characterized in that** the operating element (24) and/or the device (10) comprises an activation device (32) with which the position signaling unit (28) can be switched on and off.

3. The assembly according to claim 2, **characterized in that** the activation device (32) is disposed on the operating element (24) and is movable relative to the operating element (24₁), and the position signaling unit (28) can be switched on and off as a consequence of the relative movement.

4. The assembly according to any one of the claims 2 or 3, **characterized in that** the activation device (32) comprises a push button (38).

5. The assembly according to claim 4, **characterized in that** the push button (38) is spring-mounted.

6. The assembly according to any one of the claims 2 or 3, **characterized in that** the activation device (32) comprises a slide switch (40) or a rotary switch (44).

7. The assembly according to any one of the claims 1 to 6, **characterized in that** the operating element (24) is configured to be rod-shaped.

8. The assembly according to any one of the claims 1 to 6, **characterized in that** the operating element (24) is configured as a finger ring.

9. The assembly according to any one of the claims 1 to 5, **characterized in that** the operating element (24) is configured as a glove (58).

## Revendications

1. Ensemble (26) destiné à manœuvrer un dispositif (10) qui est conçu pour être utilisé dans des zones potentiellement explosives, dans lequel ledit ensemble (26)
- présente un dispositif (10) qui est conçu pour être utilisé dans des zones potentiellement explosives et une unité d'entrée et de sortie (12) par l'intermédiaire de laquelle des signaux de manœuvre pour manœuvrer le dispositif (10) peuvent être générés, dans lequel le dispositif (10) présente une encapsulation (22) qui est disposée en amont de l'unité d'entrée et de sortie (12),
- comprend un élément de manœuvre (24) mobile qui agit de concert avec l'unité d'entrée et de sortie (12) pour générer les signaux de manœuvre,
- dans lequel les signaux de manœuvre sont générés en utilisant la position ou le changement de position de l'élément de manœuvre (24) par rapport à l'unité d'entrée et de sortie (12), l'élément de manœuvre (24) présente une unité de signalisation de position (28) à cette fin, et
- comprend un dispositif de détection (18) qui agit de concert avec l'unité de signalisation de position (28) et au moyeu duquel peut être détecté(e) la position ou le changement de position de l'élément de manœuvre (24) par rapport à l'unité d'entrée et de sortie (12),
**caractérisé par le fait que**
- l'élément de manœuvre (24) comprend un dispositif de confirmation (41) destiné à confirmer les signaux de manœuvre générés et qui peut être activé au moyen d'une section de confirmation (42), dans lequel le dispositif de détection (18) ne comprend qu'un capteur central de champ magnétique (20), l'unité de signalisation de position (28) comprend un premier aimant permanent (51) et ledit dispositif de confirmation (41) comprend un électroaimant (34).

2. Ensemble selon la revendication 1, **caractérisé par le fait que** l'élément de manœuvre (24) et/ou le dispositif (10) comprend un dispositif d'activation (32) par l'intermédiaire duquel l'unité de signalisation de position (28) peut être allumée et éteinte.

3. Ensemble selon la revendication 2, **caractérisé par le fait que** le dispositif d'activation (32) est disposé sur l'élément de manœuvre (24) et est déplaçable par rapport à l'élément de manœuvre (24₁) et que l'unité de signalisation de position (28) peut être allumée et éteinte à la suite du mouvement relatif.

4. Ensemble selon l'une quelconque des revendications 2 ou 3, **caractérisé par le fait que** le dispositif d'activation (32) comprend un bouton-poussoir (38).

5. Ensemble selon la revendication 4, **caractérisé par le fait que** le bouton-poussoir (38) est logé à ressort.

6. Ensemble selon l'une quelconque des revendications 2 ou 3, **caractérisé par le fait que** le dispositif d'activation (32) comprend un interrupteur à glissière (40) ou un interrupteur rotatif (44).

7. Ensemble selon l'une quelconque des revendications 1 à 6, **caractérisé par le fait que** l'élément de manœuvre (24) est conçu en forme de tige.

8. Ensemble selon l'une quelconque des revendications 1 à 6, **caractérisé par le fait que** l'élément de manœuvre (24) est conçu en tant que bague.

9. Ensemble selon l'une quelconque des revendications 1 à 5, **caractérisé par le fait que** l'élément de manœuvre (24) est conçu en tant que gant (58).
